Europäisches Patentamt

European Patent Office

Office européen des brevets

(19)

(11) **EP 1 097 354 B1**

(12) **FASCICULE DE BREVET EUROPEEN**

(45) Date de publication et mention
de la délivrance du brevet:
**14.05.2003 Bulletin 2003/20**

(51) Int Cl.⁷: $G01F\ 1/66$, $G01P\ 5/00$

(21) Numéro de dépôt: **99929412.7**

(86) Numéro de dépôt international:
**PCT/FR99/01627**

(22) Date de dépôt: **06.07.1999**

(87) Numéro de publication internationale:
**WO 00/003205 (20.01.2000 Gazette 2000/03)**

(54) **MESURES CROISEES DES SIGNAUX ACOUSTIQUES D'UN DEBITMETRE**

KREUZMESSEN VON AKUSTISCHEN SIGNALEN EINES DURCHFLUSSMESSERS

CROSSED MEASUREMENTS OF FLOWMETER SOUND SIGNALS

(84) Etats contractants désignés:
**AT BE CH CY DE DK ES FI FR GB GR IE IT LI LU
MC NL PT SE**

(30) Priorité: **10.07.1998 FR 9808894**

(43) Date de publication de la demande:
**09.05.2001 Bulletin 2001/19**

(73) Titulaire: **Faure Herman
91944 Courtaboeuf (FR)**

(72) Inventeurs:
• **CERTON, Dominique
F-37200 Tours (FR)**

• **MONOD, Cédric
F-75012 Paris (FR)**
• **PABOIS, Didier
F-91530 Saint-Chéron (FR)**
• **PATAT, Frédéric
37540 Saint Cyr-sur-Loire (FR)**
• **REMENIERAS, Jean-Pierre
F-37270 Montlouis (FR)**

(74) Mandataire: **Cabinet Hirsch
34, Rue de Bassano
75008 Paris (FR)**

(56) Documents cités:
**US-A- 3 738 169        US-A- 4 221 128
US-A- 4 391 150        US-A- 5 522 393**

**Description**

La présente invention concerne un dispositif de mesure par ultrasons du déplacement d'un fluide dans une conduite, comprenant au moins deux transducteurs; elle concerne aussi un circuit d'attaque pour un tel dispositif, ainsi qu'un procédé de mesure des temps de transit entre les transducteurs d'un tel dispositif.

Les mesures de débit sont utilisées dans les applications de comptage et de mesures instantanées d'écoulements de fluides en phase liquide où gazeuse et par exemple pour le comptage transactionnel de fluides. L'information utile fournie par le système de mesures peut être la valeur instantanée ou débit instantané, la valeur moyennée dans le temps ou débit moyen, ou un volume compté entre deux repères de temps. Les mesures de débit instantané ou moyenné sont plus particulièrement utilisées dans les processus de production pour lesquels il est nécessaire de connaître, contrôler ou réguler le débit d'un ou de plusieurs fluides intervenants dans le processus. Les mesures de volumes, résultant de l'intégration des mesures de débits sur un intervalle de temps défini permettent de réaliser des comptages notamment utilisés pour des remplissages et/ou vidanges de bac, ainsi que pour des transactions de volumes de fluides entre client et fournisseur. La valeur du volume ainsi transféré doit de préférence être suffisamment précise pour être utilisée, notamment, dans le calcul des taxes relatives à cette transaction.

Par ailleurs, le système de mesure de débit se présente avantageusement comme un ensemble autonome ne nécessitant d'autre apport qu'une source d'énergie électrique de type batterie d'accumulateurs ou distribution standard en tension alternative 50 ou 60 Hz.

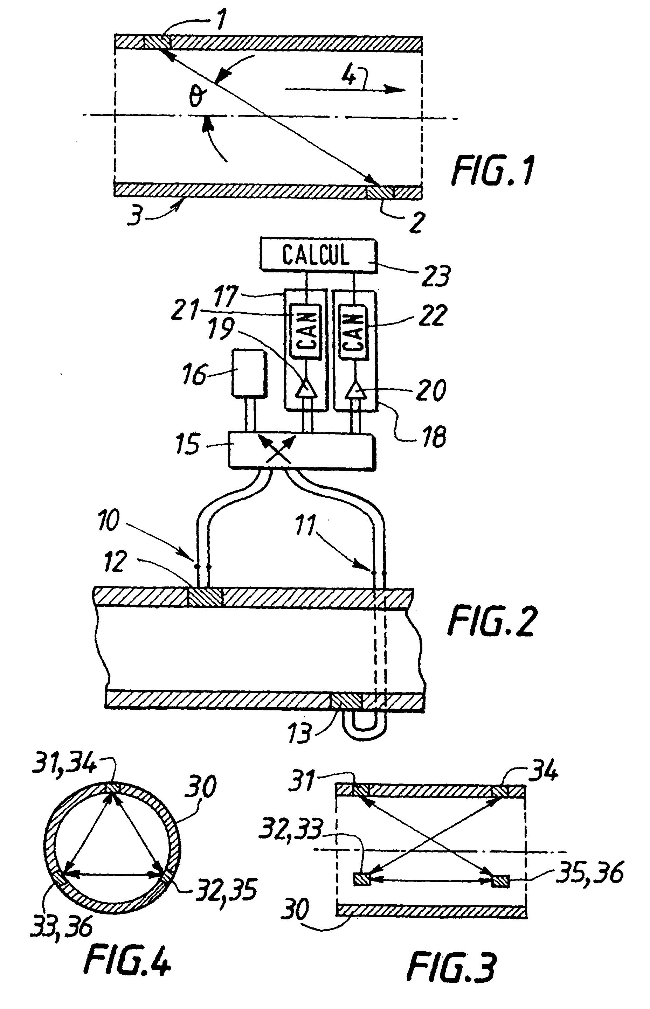

Dans le domaine de la débitmétrie en général et de la métrologie des fluides en particulier, de nombreuses techniques utilisant des dispositifs à ultrasons ont été proposées. La plupart de ses systèmes utilisent la méthode dite du temps de transit. La figure 1 montre un schéma de principe d'un débitmètre de l'art antérieur, du type monocorde. Des premier et deuxième transducteurs ultrasonores 1 et 2 sont disposés sur le bord d'une conduite 3 à travers laquelle s'écoule un fluide dans une direction symbolisée par une flèche 4. Dans l'exemple de la figure 1, la conduite est cylindrique de section circulaire, et les deux transducteurs sont disposés sur des génératrices diamétralement opposées. En outre, les deux transducteurs sont décalés le long de la conduite 1. La ligne joignant les centres des transducteurs 1 et 2 est appelée corde. Elle fait un angle θ avec l'axe principal de l'écoulement, qui est l'axe de révolution de la conduite dans l'exemple de la figure 1. La longueur de la corde est notée L et le diamètre intérieur de la conduite est notée D. Si le premier transducteur 1 émet une onde ultrasonore, celle ci est détectée après propagation par le deuxième transducteur 2 à l'issue d'un décalage temporel $T_{12}$ appelé temps de transit. Si c est la célérité du son dans le fluide, et V la vitesse moyenne du fluide le long de la corde, $T_{12}$ est donné par la relation:

$$T_{12} = L/(c + V\cos\theta) \tag{1}$$

En inversant le rôle de chacun des deux transducteurs, le deuxième transducteur 2 devenant émetteur et le premier transducteur 1 récepteur, on mesure un temps de transit $T_{21}$, qui vérifie:

$$T_{21} = L/(c - V\cos\theta) \tag{2}$$

La combinaison des relations (1) et (2) permet d'obtenir une expression de la vitesse moyenne V le long de l'axe longitudinal de la conduite, en éliminant la variable c. Dans la mesure où l'on ne connaît pas nécessairement la célérité du son dans le fluide avec une grande précision, et comme sa valeur dépend de la nature, de la température et de la pression de ce milieu en mouvement, on peut ainsi éviter ainsi une source d'erreur. La vitesse moyenne V s'écrit alors:

$$V = L.(T_{21} - T_{12})/(2\cos\theta.T_{12}T_{21}) \tag{3}$$

L'expression du débit, Q, s'obtient en multipliant la vitesse moyenne V, calculée selon (3) par la section débitante $\pi D^2/4$, pour une section circulaire, et en tenant compte le cas échéant de certains facteurs correctifs, comme décrits ci-dessous:

$$Q = \frac{T_{21} - T_{12}}{(T_{12} - T_1)(T_{21} - T_2)} x \frac{\pi.L.D^2}{8.\cos\vartheta} xK_h \tag{4}$$

Dans cette formule, $T_1$ et $T_2$ sont respectivement les durées de propagation de l'onde ultrasonore dans la partie non débitante de l'écoulement, extérieure au diamètre D, pour les trajets du premier transducteur au deuxième, et du deuxième transducteur au premier. $T_1$ et $T_2$ sont égaux sauf dans le cas particulier où il existerait un mouvement dans ces zones non débitantes. Ces temps correspondent en particulier au temps mis par l'onde ultrasonore pour traverser les différentes couches de matériaux constituant le transducteur et la zone de raccordement entre le transducteur et la veine fluide. $K_h$ est le coefficient hydraulique du débitmètre à ultrasons. Il est destiné à corriger l'échantillonnage lors de la mesure. En effet, le principe de différence de temps de transit fournit une mesure de la vitesse moyenne de l'écoulement le long de la corde de mesure reliant les transducteurs. Cette corde n'est pas forcément représentative de la surface totale débitante. Il apparaît donc une erreur du débit calculé qui dépend du profil de vitesse réel au sein de la section débitante. Le coefficient $K_h$ est utilisé afin de corriger cette erreur. Ce coefficient est généralement fixé après une mesure en laboratoire, pour une certaine plage de valeurs de débit.

Ce type de débitmètre présente les problèmes suivants. Un des facteurs principaux influençant la précision d'un débitmètre à ultrasons utilisant le principe du temps de transit est la précision avec laquelle sont obtenus les différentes mesures de temps, $T_{12}$-$T_1$, $T_{21}$-$T_2$ et $T_{21}$-$T_{12}$ intervenant dans la formule (4). Le temps $T_{12}$ ou $T_{21}$ étant de l'ordre d'une centaine de microsecondes, la mesure de ces temps de transit avec une précision de l'ordre de 1 /1 000 ne pose pas de problèmes particuliers. Par contre, la mesure précise de la différence $T_{12}$ - $T_{21}$ est beaucoup plus difficile car pour des faibles vitesses d'écoulement, cette grandeur peut être inférieure à la nanoseconde. La précision de la mesure de l'écoulement est limitée par la précision sur cette différence des temps de transit.

En outre, il est important dans certaines applications de débitmétrie de disposer de mesures de débit en temps réel. De telles applications apparaissent par exemple dans les processus de production, où le débit sera ensuite régulé en fonction du résultat de la mesure, et où un gain de temps dans la mesure peut être précieux afin d'éviter une éventuelle détérioration de la qualité ou une perte de production. Le débitmètre de la figure 1 permet difficilement de fournir des mesures en temps réel, dans la mesure où sont nécessaires des mesures successives des temps de transit dans les deux sens.

Le document US-A-3 738 169 décrit un procédé de mesure du déplacement d'un fluide dans une conduite par calcul de la différence des temps de transit d'ultrasons entre deux transducteurs dans un sens et dans l'autre.

L'invention a donc pour objet de résoudre le problème nouveau de la précision de la mesure dans les débitmètres; elle a aussi pour objet de résoudre le problème nouveau de la mesure en temps réel du débit. Un autre objet de la présente invention conceme l'amélioration de la qualité et la rapidité d'obtention du débit estimé à partir des temps de transit mesurés et d'obtenir ainsi les mesures en temps réel.

Plus précisément, l'invention propose un procédé de mesure du déplacement d'un fluide dans une conduite, par calcul de la différence des temps de transit d'ultrasons entre deux transducteurs, dans un sens et dans l'autre, caractérisé par les étapes:

- d'excitation simultanée des deux transducteurs, puis
- de mesure simultanée des signaux reçus sur chacun des transducteurs en provenance de l'autre transducteur,

  et par une étape de numérisation synchrone des signaux reçus sur chacun des transducteurs.

Dans un mode de mise en oeuvre, l'étape d'excitation simultanée s'effectue à l'aide d'un circuit unique.

On peut prévoir une étape de numérisation synchrone des signaux reçus sur chacun des transducteurs.

Dans un mode de mise en oeuvre, le calcul de la différence des temps de transit comprend l'intercorrélation des signaux reçus sur chacun des transducteurs et la recherche du maximum de l'intercorrélation.

Dans un autre mode de mise en oeuvre, le calcul de la différence des temps de transit comprend l'intercorrélation des signaux reçus, le calcul de la transformée de Hilbert de l'intercorrélation, et la recherche de zéros de la transformée de Hilbert.

Dans ce cas, la recherche de zéros s'effectue de préférence par interpolation polynomiale de la transformée de Hilbert, de préférence par interpolation à l'aide d'un polynôme de degré trois.

On peut encore prévoir une étape d'étalonnage par mesure du temps de propagation des ultrasons en dehors de la veine fluide.

Cette étape d'étalonnage comprend avantageusement la mesure du temps de transit entre les transducteurs pour deux fluides de célérité différente et connue.

Dans un mode de mise en oeuvre, le procédé comprend une étape de correction des valeurs des temps de propagation des ultrasons en dehors de la veine fluide, en fonction de la température.

L'invention concerne aussi un circuit d'attaque pour un dispositif de mesure du déplacement d'un fluide dans une conduite, avec au moins deux transducteurs définissant une corde de mesure, le circuit comprenant:

- des moyens d'excitation simultanée des deux transducteurs;
- des moyens de mesure simultanée des signaux reçus sur chacun des transducteurs en provenance de l'autre transducteur; et

- des moyens de commutation pour relier successivement les moyens d'excitation et les moyens de mesure aux bornes des transducteurs et

des moyens de numérisation synchrone des signaux reçus sur chacun des transducteurs.

Dans un mode de réalisation, les moyens de commutation comprennent un circuit de multiplexage.

Les moyens de mesure comprennent avantageusement un amplificateur et un convertisseur analogique-numérique.

L'invention concerne encore un dispositif de mesure du déplacement d'un fluide dans une conduite, comprenant au moins deux transducteurs et un tel circuit d'attaque.

D'autres caractéristiques et avantages de l'invention apparaîtront à la lecture de la description détaillée qui suit de modes de réalisation de l'invention, donnée à titre d'exemple et en référence aux dessins annexés, qui montrent

- figure 1 un schéma de principe d'un débitmètre de l'art antérieur, du type monocorde;
- figure 2 un schéma de principe d'un circuit d'attaque selon l'invention, pour un dispositif à de mesure par ultrasons du déplacement d'un fluide;
- figures 3 et 4 montrent une vue en coupe longitudinale et une vue en coupe transversale d'un dispositif de mesure d'un débitmètre à ultrasons auquel le circuit d'attaque de l'invention peut s'appliquer.

L'invention propose une solution qui permette d'améliorer sensiblement la précision de la mesure dans les dispositifs de mesure de l'écoulement d'un fluide, qui utilisent la mesure de la différence des temps de transit entre deux transducteurs. Elle s'applique à des dispositifs de mesure connus, monocorde ou multicorde, du type de celui de la figure 1, mais aussi à des dispositifs de mesure du type de celui de la figure 3, ou encore du type de ceux décrits dans la demande de brevet "Débitmètre à ultrasons multicorde" déposé par la demanderesse le même jour que la présente demande.

L'invention s'applique notamment dans les dispositifs de mesure exploitant la ressemblance des signaux représentatifs des temps de transit entre les transducteurs.

En reprenant la notation utilisée plus haut, une première méthode de calcul de la différence $T_{21} - T_{12}$ s'appuie sur la recherche du maximum de la fonction de corrélation entre les deux signaux reçus après traversée dans le sens du transducteur 1 vers le transducteur 2, et dans le sens du transducteur 2 vers le transducteur 1. Le maximum de cette fonction de corrélation des deux signaux est obtenu pour une valeur qui donne la différence des temps de transit. Un tel calcul de la différence des temps de transit s'effectue avantageusement sur des signaux numérisés, comme expliqué plus bas. Comme l'invention assure que les signaux sont d'une allure semblable, le calcul de corrélation des signaux permet d'obtenir une précision sur la mesure du temps de transit très inférieure au pas d'échantillonnage.

Une autre méthode de calcul de la différence $DT = T_{21} - T_{12}$ s'appuie sur la recherche d'un passage à zéro de la transformée de Hilbert - notée $Cs\, \tilde{r}\, (r)$ - de la fonction d'intercorrélation entre les signaux reçus après traversée dans le sens du transducteur 1 vers le transducteur 2, et dans le sens du transducteur 2 vers le transducteur 1. Cette autre méthode présente l'avantage, par rapport à la précédente, de réduire d'un facteur 10, pour un rapport signal sur bruit donné, le biais de la mesure, c'est à dire la différence entre la vraie valeur de la différence de temps et celle estimée. De nouveau, le calcul s'effectue avantageusement sur des signaux numérisés.

On note $s(n)$ et $r(n)$ les suites des N points numérisés en même temps par les convertisseurs du système d'acquisition électronique, qui correspondent aux signaux reçus. La recherche de la différence DT peut alors s'effectuer en deux étapes: on commence par une première estimation brute, puis le cas échéant on raffine cette estimation par interpolation de $Cs\, \tilde{r}\, (r)$ autour de son zéro. Dans la première étape, la transformée de Hilbert de l'intercorrélation est calculée à partir des deux signaux $r(n)$ et $s(n)$; la recherche rapide du zéro de cette fonction, situé entre les valeurs minimale et maximale de la fonction, est réalisée par calcul, par exemple par dichotomie. Le calcul de la transformée de Hilbert $Cs\, \tilde{r}\, (r)$ peut s'effectuer par transformée de Fourier rapide (FFT), comme expliqué maintenant. On commence par calculer $R(f)$ et $S(f)$, les transformées de Fourier respectives de $r(n)$ et $s(n)$. On conjugue ensuite $S(f)$ pour obtenir la conjuguée $S^*(f)$, et on multiplie la conjuguée par $R(f)$. Le produit $R(f).S^*(f)$ est ensuite multiplié dans le domaine des fréquences par $j.sign(-f)$, avec $j^2 = -1$ et $sign(-f)$ une fonction valant +1 pour les fréquences négatives, entre $-f_e/2$ et 0, et valant -1 pour les fréquences positives, entre 0 et $f_e/2$, fe étant la fréquence d'échantillonnage. On applique une transformée de Fourier inverse à la fonction $j.sign(-f).R(f).S^*(f)$ pour obtenir la transformée de Hilbert $Cs\, \tilde{r}\, (r)$.

L'estimation brute du zéro de la transformée de Hilbert peut être obtenue par dans l'intervalle temporel borné par les valeurs maximale et minimale de $Cs\, \tilde{r}\, (r)$, par comparaison des signes de deux points successifs, en commençant par la valeur maximale ou minimale.

On peut aussi procéder dans une deuxième étape à une recherche plus fine du zéro de la transformée de Hilbert, en procédant par interpolation, par exemple par interpolation de quatre points autour du zéro déterminé auparavant, notés dans la suite $A_i(x_i, y_i)$, i variant de 1 à 4. On choisit avantageusement deux points au dessus du zéro, et deux points en dessous du zéro. Une interpolation par un polynome d'ordre trois passant par les quatre points fournit de bons résultats, et constitue un compromis acceptable entre complexité et rapidité de calcul de la fonction d'interpolation. On peut utiliser pour l'interpolation polynomiale le polynôme d'interpolation de Lagrange qui s'écrit:

$$g_3(t) = \sum_{i=1}^{4} \left[ y_i \prod_{j \neq i} \frac{(t - x_j)}{(x_i - x_j)} \right]$$

ou une version normalisée de ce polynôme ou d'un autre polynôme d'interpolation. Le retard DT recherché est la racine de ce polynôme, i.e. la valeur $t_0$ réelle pour laquelle $g(t_0)=0$. Le polynôme de troisième degré peut présenter trois racines réelles que l'on peut obtenir analytiquement à partir des coefficients du polynôme normalisé, et dans ce cas, on ne retient de ces trois solutions que celle qui est comprise entre le minimum et le maximum de la transformée de Hilbert Cs $\tilde{r}$ (r) calculée précédemment.

Cette méthode permet d'obtenir une précision sur la mesure de DT très inférieure au pas d'échantillonnage. Pour des ordres de grandeur du rapport signal sur bruit des signaux reçus de 50 dB, une déviation standard sur la mesure du décalage de temps de 0,2 ns peut typiquement être obtenue avec un pas d'échantillonnage des signaux de 50 ms.

L'invention propose, pour obtenir une bonne valeur de la corrélation entre les signaux, que les signaux reçus sur chaque transducteurs soient aussi semblables que possible. Pour cela, l'invention propose d'exciter simultanément les deux transducteurs d'une corde de mesure, et de mesure ensuite en même temps les signaux reçus sur chacun des transducteurs en provenance de l'autre transducteur. Ceci présente en outre l'avantage de permettre une mesure en un temps aussi réduit que possible, puisque les mesures des temps de transit entre les deux transducteurs d'une corde de mesure on lieu simultanément.

L'invention permet en outre de limiter considérablement l'influence des variations provoquées par le déplacement du fluide. Dans les systèmes de l'art antérieur, l'écoulement du fluide pouvait varier entre les mesures successives des temps de transit dans un sens et dans l'autre; au contraire, selon l'invention, les mesures ont lieu absolument simultanément, de telle sorte que l'écoulement peut être considéré comme quasi-figé pendant le temps de la mesure. En d'autres termes, les ondes allant du transducteur 1 vers le transducteur 2 et réciproquement traversent le fluide dans les mêmes états de turbulence.

On peut ensuite traiter les signaux reçus; l'invention propose à cet effet de numériser les signaux reçus, de sorte à permettre un traitement plus précis. Ce procédé est moins coûteux et permet d'éviter les problèmes dé dérive et de contrôles propres à l'électronique analogique et de conduire ensuite les calculs nécessaires grâce à l'utilisation d'un microprocesseur incorporé dans le système débitmétrique. La gamme des fréquences ultrasonores utilisées pour les débitmètres étant comprise entre quelques centaines de kHz et quelques MHz, un temps d'échantillonnage de 50 ns à 500 ns est propre à fournir une description complète des signaux reçus.

La figure 2 montre un schéma de principe d'un circuit d'attaque selon l'invention, pour un dispositif de mesure par ultrasons du déplacement d'un fluide; le circuit de la figure 2 correspond au cas le plus simple d'un dispositif de mesure ne comprenant qu'une seule corde, i. e. deux transducteurs. Le circuit comprend des bornes 10, 11 destinées à relier les transducteurs 12, 13; ces bornes sont reliées à des moyens de commutation 15, dans l'exemple de la figure 2 un circuit de multiplexage.

Par ailleurs, le circuit de multiplexage 15 est relié à des moyens d'excitation simultanée des deux transducteurs; ces moyens comprennent un circuit émetteur unique 16, qui est susceptible d'exciter les deux transducteurs simultanément lorsque les moyens de commutation relient le circuit émetteur aux bornes des transducteurs. Les moyens de commutation permettent au circuit émetteur d'attaquer en parallèle les deux transducteurs, garantissant ainsi que les formes d'onde excitatrice vues par chaque transducteur sont simultanées et identiques. Le circuit est aussi relié à des moyens de mesure simultanée des signaux reçus sur chacun des transducteurs; dans le mode de réalisation, ces moyens de mesure comprennent deux voies de mesure 17, 18, chacune des voies de mesure étant destinée à l'un des transducteurs. Chaque voie de mesure comprend un amplificateur 19, 20, dont la sortie est reliée à un convertisseur analogique numérique 21, 22. Les préamplificateurs 19, 20 sont rendus aussi identiques que possibles au plan du choix et de l'appariement des composants, de l'implantation sur le circuit imprimé et des réglages électroniques, de façon à n'induire aucun retard ou déformation des signaux reçus. La sortie de chaque convertisseur analogique numérique est reliée à un circuit de calcul 23, par exemple réalisé sous la forme d'un microprocesseur.

Le circuit de la figure 2 permet ainsi, lorsque les moyens de commutation relient les moyens d'excitation et les transducteurs de simultanément et à l'identique exciter les transducteurs. Après que les transducteurs ont été excités, les moyens de commutation relient les transducteurs aux moyens de mesure, de sorte à mesurer simultanément les signaux reçus sur chaque transducteur en provenance de l'autre transducteur. Le principe de réciprocité applicable aux transducteurs de type piézo-électrique assure que les signaux recueillis sur chaque transducteur sont similaires, de sorte que les signaux reçus ne diffèrent que par leur temps de transit.

L'invention ne s'applique pas seulement à des dispositifs du type de celui de la figure 1, mais plus généralement à tous les types de dispositifs de mesure présentant des transducteurs, dans lesquels on mesure la différence du temps de transit entre des paires de transducteur, dans un sens de transit et dans l'autre. Des configurations de transducteurs possibles sont notamment décrites dans la demande de brevet française de la demanderesse citée plus haut. Les figures 3 et 4 montrent une vue en coupe longitudinale et une vue en coupe transversale d'un dispositif de mesure décrit dans cette demande de brevet, et auquel l'invention peut être appliquée. Le dispositif de ces figures comprend six transducteurs 31 à 36 formant deux groupes de trois transducteurs chacun, espacés le long de la conduite 30. Les transducteurs de chacun des groupes de transducteurs sont régulièrement répartis sur la périphérie de la conduite. Les transducteurs d'un des groupes présentent un diagramme de rayonnement qui recouvre au moins deux des transducteurs de l'autre groupe. Ainsi, le diagramme de rayonnement du transducteur 31 du premier groupe recouvre les transducteurs 35 et 36 du deuxième groupe, i. e. l'ensemble des transducteurs du deuxième groupe à l'exception du transducteur 34 qui est situé sur la même génératrice. Le dispositif des figures 3 et 4 permet de générer, avec six transducteurs, six cordes de mesure.

On prévoit pour le dispositif des figures 3 et 4, un circuit présentant des moyens d'excitation simultanée et identique de deux transducteurs, et des moyens de mesure simultanée des signaux reçus sur deux transducteurs; le circuit comprend en outre des moyens de commutation pour relier successivement les moyens d'excitation et les moyens de mesure aux bornes de deux transducteurs choisis parmi les six transducteurs du dispositif.

La mesure peut par exemple s'effectuer de la façon suivante

- mesure simultanée de $T_{16}$ et $T_{61}$, en reliant les transducteurs 31 et 36 au moyens d'excitation puis de mesure;
- mesure simultanée de $T_{15}$ et $T_{51}$, en reliant les transducteurs 31 et 35 au moyens d'excitation puis de mesure;
- mesure simultanée de $T_{24}$ et $T_{42}$, en reliant les transducteurs 32 et 34 au moyens d'excitation puis de mesure;
- mesure simultanée de $T_{26}$ et $T_{62}$, en reliant les transducteurs 32 et 36 au moyens d'excitation puis de mesure;
- mesure simultanée de $T_{34}$ et $T_{43}$, en reliant les transducteurs 33 et 34 au moyens d'excitation puis de mesure;
- mesure simultanée de $T_{35}$ et $T_{53}$, en reliant les transducteurs 33 et 35 au moyens d'excitation puis de mesure;

en notant Tij la mesure du temps de transit entre les transducteurs 3i et 3j, $1 \leq i,j \leq 6$.

On peut ainsi calculer en un minimum de temps les valeurs de la vitesse ou du débit sur les six cordes; la moyenne de ces valeurs donne une mesure de la vitesse ou du débit plus rapide, plus précise et plus fiable que les dispositifs connus.

Ainsi, l'invention s'applique à tout dispositif de débitmétrie ultrasonore avec une pluralité de transducteurs fixés à des positions choisies sur la paroi d'une conduite à travers laquelle s'écoule le fluide dont on souhaite mesurer le débit. La conduite peut être une conduite de tout type, taille et matériau utilisé dans la pratique. Les transducteurs sont peuvent être fixés aux parois par des moyens classiques, connus en soi. L'invention propose encore d'étalonner les temps de propagation des ultrasons en dehors de la veine fluide, comme indiqué ci-dessous. Dans le cadre des montages classiques de débitmétrie à temps de transit, les temps $T_1$ et $T_2$ sont égaux, puisque les deux ondes parcourent les mêmes trajets en sens inverses. La mesure de $(T_1 + T_2)/2$ peut s'effectuer en remplissant successivement la manchette de mesure équipée des tansducteurs par deux liquides purs à température contrôlée, de célérités différentes et connues avec une grande précision; on utilise par exemple de l'eau et de l'alcool étnylique. On effectue les mesures de temps de transit pour chaque paire de transducteurs dans chacun des milieux. On obtient alors un système linéaire de deux équations à deux inconnues $T_1+T_2$ et L; la résolution de ce système permet de stocker en une mémoire appropriée les valeurs précises de $T_1$ et de L pour l'utilisation de la formule (4) en situation opérationnelle.

L'invention propose encore, s'il s'avère que ces valeurs sont susceptibles d'évoluer en fonction de la température de manière significative pour le résultat de mesure, de corriger ces valeurs en fonction de la température. On prévoit à cette effet une sonde de température dans le dispositif de mesure, et on corrige les valeurs des temps de transit en fonction de la température. Il est clair que dans ce cas, le capteur de température peut être placé en diverses positions dans dispositif de mesure, où au voisinage de celui-ci de sorte à mesurer la température du fluide.

Le dispositif de la présente invention a été conçu de manière à répondre aux exigences déterminées par les conditions d'utilisation potentielles de l'équipement quels que soient le milieu et la finalité (débitmètrie, comptage) envisagés. En particulier, il permet une répétabilité de mesures d'un écoulement stable et une exactitude de mesure par rapport aux étalons internationaux. De même, il présente une très faible sensibilité aux conditions dynamiques de l'écoulement (conditions hydrauliques en amont du système de mesures, évolution du nombre de Reynolds...) ainsi que vis-à-vis des paramètres thermodynamiques du fluide et de l'environnement extérieur de l'équipement (pressions, températures, humidité, ... ). Le système à ultrasons décrit dans la présente invention permet donc par rapport aux dispositifs de l'état de la technique une mesure du débit de fluide avec une précision améliorée, une faible sensibilité vis-à-vis des fluctuations aléatoires de vitesse liées à la turbulence et une rapidité accrue. Le dispositif selon l'invention permet, par une réduction du nombre de transducteurs et l'introduction de l'électronique numérique, de limiter le coût du système, mais aussi le coût de la maintenance et de la recalibration.

Bien entendu, la présente invention n'est pas limitée aux modes de réalisation représentés; on pourrait aussi utiliser des circuits analogiques, ou d'autres moyens de commutation qu'un circuit de multiplexage.

## Revendications

1. Procédé de mesure du déplacement d'un fluide dans une conduite (3), par calcul de la différence des temps de transit d'ultrasons entre deux transducteurs (1, 2; 12, 13), dans un sens et dans l'autre, **caractérisé par** les étapes:

   - d'excitation simultanée des deux transducteurs (1, 2; 12, 13), puis
   - de mesure simultanée des signaux reçus sur chacun des transducteurs en provenance de l'autre transducteur,

   et par une étape de numérisation synchrone des signaux reçus sur chacun des transducteurs.

2. Procédé selon la revendication 1, **caractérisé en ce que** l'étape d'excitation simultanée s'effectue à l'aide d'un circuit unique (16).

3. Procédé selon la revendication 1 ou 2, **caractérisé en ce que** le calcul de la différence des temps de transit comprend l'intercorrélation des signaux reçus sur chacun des transducteurs et la recherche du maximum de l'intercorrélation.

4. Procédé selon la revendication 1 ou 2, **caractérisé en ce que** le calcul de la différence des temps de transit comprend l'intercorrélation des signaux reçus, le calcul de la transformée de Hilbert de l'intercorrélation, et la recherche de zéros de la transformée de Hilbert.

5. Procédé selon la revendication 4, **caractérisé en ce que** la recherche de zéros s'effectue par interpolation polynomiale de la transformée de Hilbert, de préférence par interpolation à l'aide d'un polynôme de degré trois.

6. Procédé selon l'une des revendications 1 à 5, **caractérisé en ce qu'**il comprend une étape d'étalonnage par mesure du temps de propagation des ultrasons en dehors de la veine fluide.

7. Procédé selon la revendication 6, **caractérisé en ce que** l'étape d'étalonnage comprend la mesure du temps de transit entre les transducteurs pour deux fluides de célérité différente et connue.

8. Procédé selon l'une des revendications 1 à 7, **caractérisée en ce qu'**il comprend une étape de correction des valeurs des temps de propagation des ultrasons en dehors de la veine fluide, en fonction de la température.

9. Un circuit d'attaque pour un dispositif de mesure du déplacement d'un fluide dans une conduite (3), avec au moins deux transducteurs (1, 2; 12, 13) définissant une corde de mesure, le circuit comprenant:

   - des moyens d'excitation simultanée (16) des deux transducteurs;
   - des moyens de mesure simultanée (17, 18) des signaux reçus sur chacun des transducteurs en provenance de l'autre transducteur, et
   - des moyens de commutation (15) pour relier successivement les moyens d'excitation et les moyens de mesure aux bornes (10, 11) des transducteurs,

   ainsi que des moyens de numérisation synchrone des signaux reçus sur chacun des transducteurs.

10. Un circuit selon la revendication 9, **caractérisé en ce que** les moyens de commutation comprennent un circuit de multiplexage.

11. Un circuit selon la revendication 9 ou 10, **caractérisé en ce que** les moyens de mesure comprennent au moins un amplificateur (19, 20) et au moins un convertisseur analogique-numérique (21, 22).

12. Un dispositif de mesure du déplacement d'un fluide dans une conduite, comprenant au moins deux transducteurs et un circuit d'attaque selon la revendication 9, 10 ou 11.

**Patentansprüche**

1. Verfahren zum Messen der Bewegung eines Fluids in einer Leitung (3) durch Berechnen der Differenz zwischen Ultraschall-Laufzeiten zwischen zwei Wandlern (1, 2; 12, 13) in der einen und der anderen Richtung, **gekennzeichnet durch** folgende Schritte:

   - gleichzeitiges Anregen von zwei Wandlern (1, 2; 12, 13), anschließend
   - gleichzeitiges Messen der an jedem der Wandler empfangenen Signale, die von dem anderen Wandler stammen,

   und **durch** den Schritt der synchronen Digitalisierung der an jedem der Wandler empfangenen Signale.

2. Verfahren nach Anspruch 1, **dadurch gekennzeichnet, dass** der Schritt des gleichzeitigen Anregens mit Hilfe einer einzigen Schaltung (16) durchgeführt wird.

3. Verfahren nach Anspruch 1 oder 2 **dadurch gekennzeichnet, dass** die Berechnung der Differenz der Laufzeiten das gegenseitige Korrelieren der an jedem der Wandler empfangenen Signale und das Aufsuchen des Korrelations-Maximums beinhaltet.

4. Verfahren nach Anspruch 1 oder 2, **dadurch gekennzeichnet, dass** die Berechnung der Differenz der Laufzeiten das gegenseitige Korrelieren der empfangenen Signale, die Berechnung der Hilbert-Transformierten der gegenseitigen Korrelation und das Suchen der Nullstellen der Hilbert-Transformierten beinhaltet.

5. Verfahren nach Anspruch 4, **dadurch gekennzeichnet, dass** die Suche der Nullstellen durch Polynom-Interpolation der Hilbert-Transformierten erfolgt, vorzugsweise durch Interpolation mit Hilfe eines Polynoms dritten Grades.

6. Verfahren nach einem der Ansprüche 1 bis 5, **dadurch gekennzeichnet, dass** es einen Schritt des Eichens nach Maßgabe der Ausbreitungszeit von Ultraschall außerhalb des Fluidstroms beinhaltet.

7. Verfahren nach Anspruch 6, **dadurch gekennzeichnet, dass** der Eichschritt das Messen der Laufzeit zwischen den Wandlern für zwei Fluide mit unterschiedlicher und bekannter Ausbreitungsgeschwindigkeit beinhaltet.

8. Verfahren nach einem der Ansprüche 1 bis 7, **dadurch gekennzeichnet, dass** es einen Korrekturschritt zum Korrigieren der Werte der Ultraschall-Ausbreitungszeit außerhalb des Fluidstroms in Abhängigkeit der Temperatur beinhaltet.

9. Treiberschaltung für eine Vorrichtung zum Messen der Bewegung eines Fluids in einer Leitung (3), mit mindestens zwei Wandlern (1, 2; 12, 13), die eine Meßkette definieren, umfassend:

   - eine Anregungseinrichtung zum gleichzeitigen Anregen (16) der beiden Wandler;
   - eine Einrichtung (17, 18) zum gleichzeitigen Messen der an jedem der Wandler empfangenen Signale, die von dem anderen Wandler stammen; und
   - eine Umschalteinrichtung (15) zum sukzessiven Verbinden der Anregungseinrichtung und der Meßeinrichtung mit Anschlüssen (10, 11) der Wandler,

   außerdem eine Einrichtung zum synchronen Digitalisieren der an jedem der Wandler empfangenen Signale.

10. Schaltung nach Anspruch 9, **dadurch gekennzeichnet, dass** die Umschalteinrichtung eine Multiplexerschaltung enthält.

11. Schaltung nach Anspruch 9 oder 10, **dadurch gekennzeichnet, dass** die Meßeinrichtung mindestens einen Verstärker (19, 20) und mindestens einen Analog-Digital-Wandler (21, 22) aufweist.

12. Vorrichtung zum Messen der Bewegung eines Fluids in einer Leitung, umfassend mindestens zwei Wandler und eine Treiberschaltung nach Anspruch 9, 10 oder 11.

**Claims**

1. A method for measuring the displacement of a fluid in a conduit (3), by calculating a difference in ultrasound transit time between two transducers (1, 2; 12, 13) in one direction and in the other, **characterised by** the steps:

   - of simultaneously exciting the two transducers (1, 2; 12; 13), then
   - simultaneously measuring signals received at each one of the transducers originating from the other transducer,

   and by a step of synchronously digitizing the signals received at each one of the transducers.

2. The method according to claim 1, **characterised in that** the step of simultaneous excitation is performed using a single circuit (16).

3. The method according to claim 1 or 2, **characterised in that** calculation of the difference in transit time comprises interrcorrelating signals received at each one of the transducers and seeking an intercorrelation maximum.

4. The method according to claim 1 or 2, **characterised in that** the calculation of the difference in transit time comprises intercorrelating received signals, calculating the Hilbert transform of intercorrelation, and seeking zeros of the Hilbert transform.

5. The method according to claim 4, **characterised in that** the seeking of zeros is performed by polynomial interpolation of the Hilbert transform, preferably by interpolation using a third degree polynomial.

6. The method according to one of claims 1-5, **characterised in that** it comprises a calibration step by measuring ultrasound propagation time outside the fluid vein.

7. The method according to claim 6, **characterised in that** the calibration step comprises measurement of transit time between the transducers for two fluids of different and known velocities.

8. The method according to one of claims 1-7, **characterised in that** it comprises a step of correcting values of ultrasound propagation time outside the fluid vein, as a function of temperature.

9. A driver circuit for a device for measuring displacement of the fluid in a conduit (3), with at least two transducers (1, 2; 12, 13) defining a measurement chord, the circuit comprising:

   - means for simultaneously exciting (16) two transducers;
   - means (17, 18) for simultaneously measuring received signals at each one of the transducers originating from the other; and
   - switching means (15) for successively connecting the excitation means and measurement means to the terminals (10, 11) of the transducers,

   as well as means for synchronously digitizing signals received at one of the transducers.

10. A circuit according to claim 9, **characterised in that** the switching means comprise a multiplexing circuit.

11. A circuit according to claim 9 or 10, **characterised in that** the measurement means comprise at least one amplifier (19, 20) and at least one analog/digital converter (21, 22).

12. A device for measuring fluid displacement in a conduit, comprising at least two transducers and a driver circuit according to claim 9, 10 or 11.

*FIG.1*

*FIG.2*

*FIG.4*

*FIG.3*